(19) Europäisches Patentamt
European Patent Office
Office européen des brevets

(11) EP 4 517 010 A1

(12) **EUROPEAN PATENT APPLICATION**
published in accordance with Art. 153(4) EPC

(43) Date of publication:
**05.03.2025 Bulletin 2025/10**

(21) Application number: **23831179.9**

(22) Date of filing: **19.06.2023**

(51) International Patent Classification (IPC):
***E02F 9/26*** *(2006.01)* ***G06T 7/70*** *(2017.01)*

(52) Cooperative Patent Classification (CPC):
**E02F 9/26; G06T 7/70**

(86) International application number:
**PCT/JP2023/022568**

(87) International publication number:
**WO 2024/004733 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105343**

(71) Applicants:
- **KABUSHIKI KAISHA KOBE SEIKO SHO (KOBE STEEL, LTD.)**
  **Hyogo 651-8585 (JP)**
- **KOBELCO CONSTRUCTION MACHINERY CO., LTD.**
  **Hiroshima-shi, Hiroshima 731-5161 (JP)**

(72) Inventors:
- **YOSHIMOTO, Tatsuya**
  **Hyogo 651-2271 (JP)**
- **OKAMOTO, Akira**
  **Hyogo 651-2271 (JP)**
- **YOSHIDA, Daisuke**
  **Hyogo 651-2271 (JP)**
- **NAKAGAWA, Tomohiro**
  **Hiroshima-shi, Hiroshima 731-5161 (JP)**
- **KATO, Satoshi**
  **Hiroshima-shi, Hiroshima 731-5161 (JP)**
- **HAMAMOTO, Ryo**
  **Hiroshima-shi, Hiroshima 731-5161 (JP)**
- **ENDO, Kazuomi**
  **Hiroshima-shi, Hiroshima 731-5161 (JP)**

(74) Representative: **TBK**
**Bavariaring 4-6**
**80336 München (DE)**

(54) **SLEWING ANGLE MEASUREMENT DEVICE AND METHOD FOR WORK MACHINE, AND RECORDING MEDIUM**

(57) The present invention includes: acquiring a plurality of images generated in a time series by an image capturing part being movable in conjunction with slewing of a slewing body of a working machine, each of the images showing an external environment in a view from the slewing body; calculating first slewing angles of the slewing body, with reference to a position of the slewing body relative to a base body shown in a foremost image among the images, for the images respectively on the basis of each image among the images and on the basis of a preceding image adjacent to the image in the time series; obtaining a predetermined position in the external environment to be a slewing angle reference on the basis of the first slewing angles calculated by the first slewing angle calculation part for the images respectively; and calculating, on the basis of the first slewing angles calculated for the images respectively and on the basis of the slewing angle reference, second slewing angles of the slewing body with respect to the slewing angle reference for the images respectively.

FIG.1

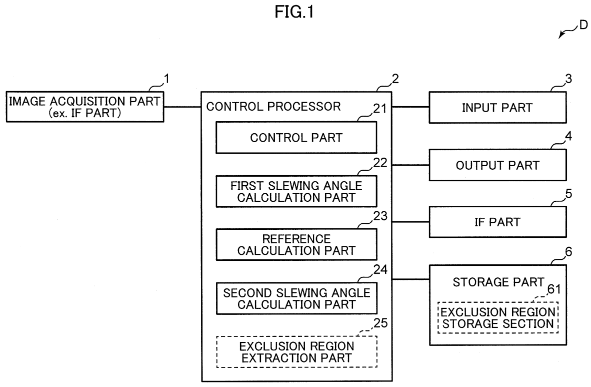


EP 4 517 010 A1

## Description

### Technical Field

The present invention relates to a working machine slewing angle measurement system, a working machine slewing angle measurement method, and a recording medium that records a working machine slewing angle measurement program, to each calculate a slewing angle of a slewing body of a working machine.

### Background Art

A working machine including a base body, a slewing body connected to the base body in a slewing manner, and a working mechanism mounted on the slewing body to execute a predetermined work allows an operator, user, or a worker to perform the predetermined work while making the slewing body slew in some cases. Hence, there is a demand for grasping a slewing angle of the slewing body. Patent Literature 1 discloses, for example, a technology of calculating a slewing angle of a slewing body.

An angle detection system for a construction machine disclosed in Patent Literature 1 includes: a camera mounted on a slewing body in a slewing manner with respect to a traveling body to capture an image of the traveling body; and an angle detector that detects an edge of a predetermined portion of the traveling body after image processing to the image captured by the camera, and calculates an angle of the slewing body relative to the traveling body.

The angle detection system for the construction machine disclosed in Patent Literature 1 calculates the angle of the slewing body relative to the traveling body with reference to the predetermined portion of the traveling body, but still maintains the need to calculate a slewing angle of the slewing body with reference to a direction in which the slewing body mainly faces in the work. The construction machine may be used on various sites, have various specifications, and undergo remodeling or modification, and thus, may fail to detect the slewing angle by a conventional way referring to a specific object or marker, e.g., with reference to a predetermined portion of the traveling body.

### Citation List

### Patent Literature

Patent Literature 1: Japanese Unexamined Patent Publication No. 2017-58272

### Summary of Invention

The present invention has been accomplished in view of the circumstances described above, and an object of the present invention is to provide a working machine slewing angle measurement system, a working machine slewing angle measurement method, and a recording medium that records a working machine slewing angle measurement program, to each calculate a slewing angle of a slewing body with reference to a direction in which the slewing body mainly faces in a work without relying on a specific object or marker as a reference.

A working machine slewing angle measurement system and a working machine slewing angle measurement method each reflecting one aspect of the present invention includes performance of: acquiring a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body; calculating first slewing angles of the slewing body, with reference to a position of the slewing body relative to the base body shown in a foremost image among the images, for the images respectively on the basis of each image among the images and on the basis of a preceding image adjacent to the image in the time series; obtaining a predetermined position in the external environment to be a slewing angle reference on the basis of the first slewing angles calculated by the first slewing angle calculation part for the images respectively; and calculating, on the basis of the first slewing angles calculated for the images respectively and on the basis of the slewing angle reference, second slewing angles of the slewing body with respect to the slewing angle reference for the images respectively. A recording medium reflecting another aspect of the present invention records a working machine slewing angle measurement program to cause a computer to serve as the working machine slewing angle measurement system.

The foregoing, and the object, features, and advantages of the present invention will be further clarified by the following detailed description and the accompanying drawings.

### Brief Description of Drawings

Fig. 1 is a block diagram showing a configuration of a working machine slewing angle measurement system in an embodiment.

Fig. 2 is a side view of a demolishing machine including the working machine slewing angle measurement system as an example.

Fig. 3 includes illustrations for each explaining an image and a feature point extracted from the image as examples.

Fig. 4 includes illustrations for each explaining first and second feature points associated with each other between first and second images as examples.

Fig. 5 is a graph showing an actual measurement value and an analytic value concerning a slewing angle of a slewing body as an example.

Fig. 6 is a graph showing first slewing angles in a time series and a slewing angle reference obtained on the basis the first slewing angles as an example.

Fig. 7 includes graphs respectively showing first and second slewing angles each in a time series as examples.

Fig. 8 is a flowchart showing an operation of the working machine slewing angle measurement system.

Fig. 9 is a graph showing first slewing angles in a time series and a slewing angle reference obtained on the basis of the first slewing angles, the first slewing angles including a first slewing angle at which the slewing body is at rest, as an example.

Fig. 10 is a graph showing a determination result as to whether the slewing body is determined as being at rest or not in connection with the case in Fig. 9.

Fig. 11 is a graph showing the first slewing angles in the time series and a slewing angle reference obtained by excluding a first slewing angle at which the slewing body is at rest in connection with the case in Fig. 9.

Fig. 12 is an illustration for explaining a manual setting of an exclusion region.

Fig. 13 is a flowchart showing an operation of the working machine slewing angle measurement system concerning an automatic setting of the exclusion region.

## Description of Embodiments

Hereinafter, one or more embodiments of the present invention will be described with reference to the accompanying drawings. However, the present invention should not be limited to the disclosed embodiments. Elements denoted by the same reference numerals in the drawings have the same configuration and, therefore, repeated descriptions will be appropriately omitted. In the present specification, elements are denoted by a same reference numeral when being referred to collectively, and are denoted by a same reference numeral accompanied by a different respective reference character when being referred to individually.

A working machine slewing angle measurement system in an embodiment includes: an image acquisition part that acquires a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body; a first slewing angle calculation part that calculates first slewing angles of the slewing body, with reference to a position of the slewing body relative to the base body shown in a foremost image among the images, for the images respectively on the basis of each image among the images and on the basis of a preceding image adjacent to the image in the time series; a reference calculation part that obtains a predetermined position in the external environment to be a slewing angle reference on the basis of the first slewing angles calculated by the first slewing angle calculation part for the images respectively; and a second slewing angle calculation part that calculates, on the basis of the first slewing angles calculated by the first slewing angle calculation part for the images respectively and on the basis of the slewing angle reference obtained by the reference calculation part, second slewing angles of the slewing body with respect to the slewing angle reference for the images respectively. Hereinafter, the working machine slewing angle measurement system, and a working machine slewing angle measurement method and a working machine slewing angle measurement program each to be mounted for the system will be described in more detail in relation to a demolishing machine including the same as an example.

Fig. 1 is a block diagram showing a configuration of a working machine slewing angle measurement system in the embodiment. Fig. 2 is a side view of a demolishing machine including the working machine slewing angle measurement system as an example. Fig. 3 includes illustrations for each explaining an image and a feature point extracted from the image as examples. Fig. 3A shows an example image. Fig. 3B shows feature points extracted from the image in Fig. 3A. Fig. 4 includes illustrations for each explaining first and second feature points associated with each other between first and second images as examples. Fig. 4A illustrates first and second feature points before filtering processing to remove an association failure. Fig. 4B illustrates first and second feature points after the filtering processing. Fig. 5 is a graph showing an actual measurement value and an analytic value concerning a slewing angle of a slewing body as an example. Fig. 5 shows a horizontal axis indicating a time, a vertical axis indicating an angle, a dashed line representing an actual measurement value, and a solid line representing an analytic value. Fig. 6 is a graph showing first slewing angles in a time series and a slewing angle reference obtained on the basis the first slewing angles as an example. Fig. 6 shows a horizontal axis indicating a time and a vertical axis indicating an angle. Fig. 7 includes graphs respectively showing first and second slewing angles each in a time series as examples. Fig. 7A is a graph showing a plurality of second slewing angles. Fig. 7B is a graph showing a plurality of first slewing angles. Each graph in Fig. 7 shows a horizontal axis indicating a time and a vertical axis indicating an angle.

A working machine slewing angle measurement system D in the embodiment includes, for example, an image acquisition part 1, a control processor 2, an input part 3, an output part 4, an interface part (IF part) 5, and a storage part 6, as illustrated in Fig. 1. The working machine slewing angle measurement system is, for example, included in a working machine HS.

The working machine HS adopting the working machine slewing angle measurement system D is a machine, e.g., a construction machine, for performing a work executable by a working mechanism. For instance, as illustrated in Fig. 2, the working machine HS includes: a lower traveling body 101 including a left traveling crawler 101L and a right traveling crawler (not shown), and configured to travel; an upper frame 102 mounted on the lower traveling body 101 in a slewing manner and serving as a base; a machine chamber 103 provided on the upper frame 102 and accommodating therein, for example, an unillustrated engine, such as an internal-combustion engine, and a hydraulic pump that generates motive power to drive a working attachment 104 to be described below; the working attachment 104 mounted on the upper frame 102 in a tiltable manner; an unillustrated manipulation member, such as a manipulation lever, to manipulate the working attachment 104; and a cab compartment or manipulation compartment 105 where the manipulation member is arranged.

The working attachment 104 is a working mechanism that performs a predetermined work in accordance with a kind of the working machine HS. In the embodiment, the working machine HS is, for example, a demolishing machine. The working attachment 104 is, for example, a mechanism including: a boom 141 connected to the upper frame 102 in a slewing manner in an up-down direction; an arm 142 connected to a distal end of the boom 141 in a slewing manner in the up-down direction; and an openable and closable crusher 143 connected to a distal end of the arm 142 and having a pair of openable and closable crushing blades. The boom 141 tilts with respect to the upper frame 102 in response to each of extension and contraction of the boom cylinder 144a. The arm 142 swings with respect to the boom 141 in response to each of extension and contraction of the arm cylinder 144b. The openable and closable crusher 143 is openable and closable in response to extension and contraction of the crusher cylinder 144c. Each of the boom cylinder 144a, the arm cylinder 144b, and the crusher cylinder 144c is in the form of a hydraulic cylinder to be driven by the hydraulic pump.

The working machine HS is the exemplary demolishing machine in this example, but may be, for example, a hydraulic excavator without limitation to the demolishing machine. In this example, the lower traveling body 101 serves as an example base body. The upper frame 102, the machine chamber 103, and the cab compartment 105 serve to constitute an example slewing body connected to the base body in a slewing manner. The working attachment 104 serves as an example working mechanism mounted on the slewing body to execute a predetermined work.

In the embodiment, the working machine HS further includes an image capturing part 106 being movable in conjunction with slewing of the slewing body. The image capturing part 106 generates a plurality of images in a time series, each of the images showing an external environment in a view from the slewing body. In the example in Fig. 2, the image capturing part 106 is attached to an outer part of the cab compartment 105 constituting the example slewing body, e.g., attached onto an outer top surface of the ceiling of the cab compartment, with an optical axis of the image capturing part facing slightly downward in such a manner that a capturing field overlaps the visual field of an operator of the working machine HS. The image capturing part 106 is, for example, a monochrome digital camara or a color digital camera that can generate, for example, a video image.

Referring back to Fig. 1, the image acquisition part 1 is connected to the control processor 2 and acquires the images generated by the image capturing part 106 under a control of the control processor 2, and further serves as, for example, a circuit for inputting and outputting data with respect to an external device. In the embodiment, the image acquisition part 1 acquires such an example video image including a plurality of images in a time-series from the image capturing part 106.

For instance, the image acquisition part 1 may acquire the images from, for example, a USB memory, an SD card (registered trademark), or other storage medium that stores the images, may acquire the images from, for example, a compact disc recordable (CD-R) medium, a digital versatile disc recordable (DVD-R) medium, or other recordable medium that records the images via a drive device, or may acquire the images from, for example, a server that manages the images via a network.

The image acquisition part 1 may serves as, for example, the IF part 5 to be described later, or may be independent of the IF part 5, for example.

The input part 3 is connected to the control processor 2, and inputs, into the working machine slewing angle measurement system D, for example, various commands including a command of instructing a start to measure a slewing angle and various kinds of data which is necessary to drive the working machine slewing angle measurement system D, such as a name and a date of the work. Examples of the input part 3 include a plurality of input switches to which predetermined functions are assigned, a keyboard, and a mouse. The output part 4 is connected to the control processor 2 and outputs the commands and data input from the input part 3, the slewing angle, and the like under the control of the control processor 2. Examples of the output part include a display device, such as a cathode ray tube (CRT) display, a liquid crystal display, and an organic electroluminescence (EL) display, and a printing device, such as a printer. For instance, the input part 3 and the output part 4 may respectively serve as a manipulation panel and a display panel in the working machine HS, or may be, for example, independent of the manipulation panel and the display panel.

Alternatively, the input part 3 and the output part 4 may constitute a so-called touch screen. In the configuration of the touch screen, the input part 3 serves as, for example, a position input device of a resistive film type or an electrostatic capacitive type that detects and inputs an operation position, and the output part 4 serves as a display device. This touch screen is provided with the position input device on a display surface of the display device, and displays one or more input content candidates that can be input into the display device. When a user touches a display position where an input content desired to be input is displayed, the position input device detects the position, and the display content displayed at the detected position is input into the working machine slewing angle measurement system D as a user's operation input content. Such a touch screen allows the user to understand an input operation intuitively and easily. This results in making the working machine slewing angle measurement system D user-friendly.

The IF part 5 is a circuit that is connected to the control processor 2 and inputs and outputs data into and from an external device under the control of the control processor 2. Examples of the circuit include an interface circuit of RS-232C being a serial communication way, an interface circuit using the Bluetooth (registered trademark) standard, an interface circuit that performs infrared communication using an Infrared Data Association (IrDA) standard or other standard, and an interface circuit using a Universal Serial Bus (USB) standard. Further, the IF part 5 may be a circuit that communicates with an external device, and may be, for example, a data communication card, or a communication interface circuit conforming to the Institute of Electrical and Electronics Engi (IEEE) 802.11 standard.

The storage part 6 is a circuit that is connected to the control processor 2 and stores various predetermined programs and various kinds of predetermined data under the control of the control processor 2. The various predetermined programs include, for example, control processing programs. The control processing programs includes a control program, a first slewing angle calculation program, a reference calculation program, and a second slewing angle calculation program. The control program is a program for controlling each of the parts 1 and 3 to 6 of the working machine slewing angle measurement system D in accordance with a function of each part. The first slewing angle calculation program is a program for calculating first slewing angles of the slewing body, with reference to a position of the slewing body relative to the base body shown in a foremost image among the images, for the images respectively on the basis of each image among the images and on the basis of a preceding image adjacent to the image in the time series. The reference calculation program is a program for obtaining a predetermined position or first position in the external environment to be a slewing angle reference on the basis of the first slewing angles calculated with the first slewing angle calculation program for the images respectively. The second slewing angle calculation program is a program for calculating, on the basis of the first slewing angles calculated with the first slewing angle calculation program for the images respectively and on the basis of the slewing angle reference obtained with the reference calculation program, second slewing angles of the slewing body with respect to the slewing angle reference for the images respectively. The various kinds of predetermined data include, for example, data which is necessary to execute each of the programs, such as the images, the first slewing angles, the slewing angle reference (the predetermined position in the external environment), and the second slewing angles. The storage part 6 includes, for example, a read only memory (ROM) that is a nonvolatile storage element, an electrically erasable programmable read only memory (EEPROM) that is a rewritable nonvolatile storage element, or other storage element. The storage part 6 includes a random access memory (RAM) serving as a so-called working memory of the control processor 2 that stores data and the like generated in execution of the predetermined programs. The storage part 6 may include a hard disk device capable of storing a large capacity of data.

The various predetermined programs may be recorded in a recording medium, e.g., a CD-ROM or a DVD-R, and may be stored in the storage part 6 via a drive device connected to the IF part 5.

The control processor 2 controls each of the parts 1 and 3 to 6 of the working machine slewing angle measurement system D in accordance with a function of each part, and serves as a circuit for calculating the second slewing angle of the slewing body with respect to the predetermined position being the slewing angle reference in the external environment. The control processor 2 includes, for example, a central processing part (CPU) and its peripheral circuits. The control processor 2 is configured to functionally include a control part 21, a first slewing angle calculation part 22, a reference calculation part 23, and a second slewing angle calculation part 24 by executing the control processing programs.

The control part 21 controls each of the parts 1 and 3 to 6 of the working machine slewing angle measurement system D in accordance with the function of each part to entirely control the working machine slewing angle measurement system D. The control part 21 causes the storage part 6 to store the images acquired by the image acquisition part 1.

The first slewing angle calculation part 22 calculates first slewing angles of the slewing body, with reference to a position of the slewing body relative to the base body shown in a foremost image among the images, for the images respectively on the basis of each image among the images and on the basis of a preceding image adjacent to the image in the time series.

Specifically, for the images respectively, the first slewing angle calculation part 22 extracts a feature point or first feature point from an image or first image, extracts, from a preceding image or second image adjacent to the first image in a time series, a feature point or second feature point associated with the first feature point extracted from the first image, and calculates, with reference to the position of the slewing body relative to the base body shown in the foremost image among the images, the first slewing angle of the slewing body on the basis of a movement amount between the first and second feature points. Such a feature point is distinguishable from others on an image, and examples of the feature point include a corner and an edge of a subject seen in the image.

More specifically, in the embodiment, the images acquired by the image acquisition part 1 constitute a video image generated by the image capturing part 106. Thus, the first slewing angle calculation part 22 first divides the video image into frames of the images, allots labels (such as, a first label, a serial number of an image, and an image ID) of serial integer numbers k in order from "1" to the images respectively in the time series (k=1, 2, ..., K, where "K" indicates a total number of the images), and the storage part 6 stores the labeled images.

Subsequently, for each of the images, the first slewing angle calculation part 22 extracts a feature point from the image (first image) and extracts a feature point from a preceding image (second image) adjacent to the image in the time series. Various ways are adoptable to extract each feature point. Here, the "A-KAZE" algorism is, for example, adopted. For instance, in the image in Fig. 3A, a feature point "●" in Fig. 3B is extracted.

Subsequently, the first slewing angle calculation part 22 retrieves and selects the feature point extracted from the second image and associated with the feature point extracted from the first image through associated point retrieval (feature point matching). Various ways including the "kNN" algorism are adoptable for the associated point retrieval. Here, the Brute-Force Matcher is, for example, adopted. For instance, a feature point on an image PC1 in the $(k-1)^{th}$ frame and a feature point on an image PC2 in the $k^{th}$ frame are associated with each other between the image PC1 and the image PC2, as illustrated in Fig. 4A. In Fig. 4A, feature points associated with each other are connected to each other with lines. Fig. 4B shows feature points connected to each other in the same manner.

Then, the first slewing angle calculation part 22 executes filtering processing to remove an association failure among the feature points associated with each other through the associated point retrieval. For example, a movement amount between feature points associated with each other in the adjacent frames is small. For the filtering processing in this example, when the movement amount between the feature points indicates a predetermined threshold (first threshold) or higher, processing of removing the feature points is, for example, adopted (filtering processing in the first aspect). Alternatively, for example, such a movement amount between the feature points results from slewing of the slewing body, and thus mainly has a horizontal component in a left-right direction without almost no vertical component in the up-down direction. For the filtering processing in this example, when the vertical component in the movement amount between the feature points indicates a predetermined threshold (second threshold) or higher, processing of removing the feature points is adopted (filtering processing in the second aspect). Further alternatively, for example, for the filtering processing, when a standardization variable in the movement amount between the feature points indicates a predetermined threshold (third threshold) or higher, processing of removing the feature points is, for example, adopted to remove a so-called outlier (filtering processing in the third aspect). The standardization variable between the feature points is calculated by subtracting an average value of movement amounts among all the feature points from the aforementioned movement amount between the feature points and dividing a value resulting from the subtraction by a standard deviation in the movement amounts among all the feature points. The standardization variable is expressed as a value resulting from the division in the following manner: (the standardization variable between the feature points) = [(the movement amount between the feature points) - (an average value of movement amounts among all the feature points)/(a standard deviation based on the movement amounts among all the feature points)]. Alternatively, for instance, for the filtering processing, processing of selecting only a preset number of feature points in order from smaller movement amounts between feature points from among all the feature points is adopted to pick up suitable feature points (filtering processing in the fourth aspect). For instance, in the example in Fig. 4A, a feature point on the image PC2 associated with a feature point on the image PC1 remains as illustrated in Fig. 4B after the filtering processing in the second aspect. Consequently, such a second feature point on the second image associated with the first feature point extracted from the first image is extracted. The first to the third thresholds are, for example, appropriately set in advance from a plurality of samples.

Subsequently, the first slewing angle calculation part 22 calculates the average value of the movement amounts among all the feature points after the filtering processing as the movement amount between the first and second images, and converts the calculated movement amount between the first and second images into a slewing angle (angle change amount) $\Delta\gamma$ taken between the first and second images. Specifically, the slewing angle (angle change amount) $\Delta\gamma$ taken between the first and second images is calculated with the following Equation 1. More specifically, the slewing angle (angle change amount) $\Delta\gamma$ taken between the first and second images is calculated by averaging values resulting from multiplying an angle per pixel by movement amount between the first and second images.

Formula 1

Equation 1.

$$\Delta\gamma = \frac{\theta_h}{WN}\sum_{n=1}^{N}(x_{k,n} - x_{k-1,n})$$

Here, the sign "$\theta_h$" denotes a horizontal view angle of the image capturing part 106. The sign "W" denotes a pixel number in a horizontal direction on an image generated by the image capturing part 106. The sign "$X_{k,n}$" denotes an x-coordinate at the $n^{th}$ feature point extracted from an image in the $k^{th}$ frame on an xy-rectangular coordinate system having a coordinate origin at an upper-left corner, an x-axis in the horizontal direction, and a y-axis in the vertical direction in a front view as illustrated in Fig. 3 and Fig. 4. The sign "N" denotes a total number of feature points. Labels (such as, a second label, a serial number of a feature point, and a feature ID) of serial integer numbers n in order from "1" are allotted to the feature points subjected to the filtering processing. The same number or label is allotted to the first and second features associated with each other.

The first slewing angle calculation part 22 then calculates a first slewing angle $\gamma_k$ of the slewing body about the first image by adding the slewing angle $\Delta\gamma$ taken between the first and second images to a first slewing angle $\gamma_{k-1}$ of the slewing angle calculated about the preceding second image adjacent to the first image in the time series ($\gamma_k = \gamma_{k-1} + \Delta\gamma$).

In this manner, the first slewing angles of the slewing body are calculated for the images respectively by defining a slewing angle of the slewing body shown in the foremost image among the images as "0", that is, with reference to a position of the slewing body relative to the base body shown in the foremost image among the images.

Fig. 5 shows an analytic value of each calculated first slewing angle of the slewing body together with an actual measurement value thereof. The actual measurement value results from measurement by a rotary encoder. As shown in Fig. 5, each analytic value substantially agrees with the associated actual measurement value, and the above-described way enables accurate estimation of each first slewing angle of the slewing body.

The reference calculation part 23 obtains a predetermined position in the external environment to be a slewing angle reference on the basis of the first slewing angles calculated by the first slewing angle calculation part 22 for the images respectively. Specifically, the reference calculation part 23 obtains a straight line defining an angle with respect to a time by employing predetermined linear approximation way, the angle approximating a plurality of first slewing angles in a time series calculated by the first slewing angle calculation part 22 for the images respectively, and calculates the angle defined by the obtained straight line to be the slewing angle reference. Examples of the linear approximation way include a least square way and the Random Sample Consensus (RANSAC). Fig. 6 shows an example of a slewing angle reference $\gamma_0$ obtained by employing the least square way. In the example in Fig. 6, the slewing angle reference $\gamma_0$ is expressed with reference to a position ($\gamma_1 = 0$) of the slewing body relative to the base body shown in a foremost image among the images in the time series.

The second slewing angle calculation part 24 calculates, on the basis of the first slewing angles calculated by the first slewing angle calculation part 22 for the images respectively and on the basis of the slewing angle reference obtained by the reference calculation part 23, second slewing angles of the slewing body with respect to the slewing angle reference for the images respectively. Specifically, the second slewing angle calculation part 24 calculates the second slewing angles of the slewing body with respect to the slewing angle reference for the images respectively by subtracting the slewing angle reference obtained by the reference calculation part 23 from the first slewing angles calculated by the first slewing angle calculation part 22 for the images respectively.

Fig. 7A shows a relevant example. For instance, in a work of demolishing automobiles with an openable and closable crusher by slewing the slewing body leftward and rightward relative to a predetermined second position in the external environment, a specific operation is executed in the same manner to each of the automobiles to be demolished. In this regard, profiles about the first slewing angles of the slewing body have similar patterns as illustrated in Fig. 7B. However, initial positions to start demolition works differ from each other, that is, the openable and closable crusher faces in different directions respectively for the automobiles, and hence, the profiles do not coincide. Fig. 7B shows a graph GRA of the first slewing angles calculated from a video image A about a demolition work of demolishing an automobile a, and a graph GRB of the first slewing angles calculated from a video image B about a demolition work of demolishing an automobile b. The graph GRA and the graph GRB show patterns similar to each other, but the patterns do not coincide. In contrast, the working machine slewing angle measurement system D in the embodiment deduces the predetermined position in the external environment as a predetermined second position in the external environment, and calculates the second slewing angles of the slewing body with respect to a direction, in which the slewing body faces toward each automobile to be demolished, to be a slewing angle reference. Accordingly, respective profiles of the second slewing angles of the slewing body about the automobiles to be demolished substantially coincide as illustrated in Fig. 7A. This achieves comparison and analysis of the demolition works for the automobiles to be demolished.

The image acquisition part 1, the control processor 2, the input part 3, the output part 4, the IF part 5, and the storage part 6 are configurable by, for example, a desktop computer, a laptop computer, or a tablet computer. Such a computer may be incorporated in, for example, the working machine HS. Alternatively, for instance, in a case where the working machine HS includes a computer, the aforementioned computer may serve as the computer in the working machine HS.

Next, an operation in the embodiment will be described. Fig. 8 is a flowchart showing the operation of the working machine slewing angle measurement system.

The working machine slewing angle measurement system D having this configuration is powered on to execute initialization of each part which is necessary and start an operation of each part. The control processor 2 is configured to functionally include the control part 21, the first slewing angle calculation part 22, the reference calculation part 23, and the second slewing angle calculation part 24 by executing the control processing programs.

In Fig. 8, the working machine slewing angle measurement system D first makes the control part 21 of the control processor 2 cause the image acquisition part 1 to acquire a plurality of images in a time series from the image capturing part 106, and cause the storage part 6 to store the images, each of the images showing an external environment in a view from the slewing body (step S1). In the embodiment, a video image is acquired as described above. For instance, a video image for a predetermined time length corresponding to a work time from a start to a finish of one work is acquired.

Next, the working machine slewing angle measurement system D makes the first slewing angle calculation part 22 of the control processor 2 divide the video image into frames of the images and allot serial integer numbers k from "1" to "K" to the images, and makes the storage part 6 store the numbered images (step S2).

Subsequently, the working machine slewing angle measurement system D makes the first slewing angle calculation part 22 extract a feature point for a first image PC(1), makes the storage part 6 store the extracted feature point, and makes the first slewing angle calculation part set a loop counter "k" to "2" (k = 2) and set an initial value "0" to a first slewing angle $\gamma_1$ of the slewing body for the first image PC(1) ($\gamma_1$=0,step S3. Each serial integer number k serves as the loop counter k.

Then, the working machine slewing angle measurement system D makes the first slewing angle calculation part 22 extract a feature point from a $k^{th}$ image PC(k) and makes the storage part 6 store the extracted feature point (step S3).

Further, the working machine slewing angle measurement system D makes the first slewing angle calculation part 22 retrieve and select a feature point extracted from a $(k-1)^{th}$ image (second image) PC(k-1) associated with the feature point extracted from the $k^{th}$ image (first image) PC(k) through associated point retrieval (feature point matching), and makes the storage part 6 store the retrieved and selected feature point (step S5).

Thereafter, the working machine slewing angle measurement system D makes the first slewing angle calculation part 22 execute filtering processing to remove an association failure to the feature points associated with each other through the associated point retrieval, and makes the storage part 6 store the result (step S6).

Furthermore, the working machine slewing angle measurement system D makes the first slewing angle calculation part 22 calculate an average value of movement amounts among all the feature points after the filtering processing as a movement amount between the $k^{th}$ image (first image) PC(k) and the $(k-1)^{th}$ image (second image) PC(k-1) and calculate a slewing angle (angle change amount) $\Delta y$ on the basis of the calculated movement amount, and makes the storage part 6 store the calculated slewing angle (step S7).

Moreover, the working machine slewing angle measurement system D makes the first slewing angle calculation part 22 calculate a first slewing angle $\gamma_k$ of the slewing body for the $k^{th}$ image (first image) PC(k) by adding the calculated slewing angle (angle change amount) $\Delta\gamma$ to a first slewing angle $\gamma_{k-1}$ of the slewing body calculated for the $(k-1)^{th}$ image (second image) PC(k-1), i.e., $\gamma_k = \gamma_{k-1} + \Delta\gamma$, (step S8).

Subsequently, the working machine slewing angle measurement system D makes the first slewing angle calculation part 22 determine whether the loop counter k reaches a total number K of the plurality of images (step S9). When the loop counter k reaches the total number K as a result of the determination, the working machine slewing angle measurement system D proceeds to step S11. In contrast, when the loop counter k does not reach the total number K as a result of the determination, the working machine slewing angle measurement system D increments the loop counter k only by 1, i.e., k = k +1, (step S10), and returns the process to step S4.

In step S11, the working machine slewing angle measurement system D makes the reference calculation part 23 of the control processor 2 obtain a predetermined position in the external environment to be a slewing angle reference $\gamma_0$ on the basis of the first slewing angles $\gamma_1$ to $\gamma_K$ calculated by the first slewing angle calculation part 22 for the images PC(1) to PC(K) respectively.

Next, the working machine slewing angle measurement system D makes the second slewing angle calculation part 24 of the control processor 2 calculate, on the basis of the first slewing angle $\gamma_k$ calculated by the first slewing angle calculation part 22 for the image PC(k) and on the basis of the slewing angle reference $\gamma_0$ obtained by the reference calculation part 23, second slewing angles of the slewing body with respect to the slewing angle reference $\gamma_0$ for the images PC(1) to PC(K) respectively, and process is finished (step S12). The working machine slewing angle measurement system D outputs each second slewing angle to the output part 4 if necessary, and outputs the second slewing angle to an external device via the IF part 5 if necessary.

As described heretofore, the working machine slewing angle measurement system D in the embodiment, and a working machine slewing angle measurement method and a working machine slewing angle measurement program each to be mounted for the system are intended for obtaining a predetermined position in an external environment to be a slewing angle reference and calculating the second slewing angles of a slewing body with respect to the slewing angle reference. This leads to establishment of such a reference in the external environment in a direction in which the slewing body in a work faces, resulting in achievement of calculation of a slewing angle of the slewing body with reference to the direction in which the slewing body mainly faces in the work without relying on a specific object or marker as the reference.

Each of the working machine slewing angle measurement system D, the working machine slewing angle measurement method, and the working machine slewing angle measurement program enables, in a work executed by slewing the slewing body leftward and rightward relative to a predetermined second position in the external environment, calculation of the second slewing angles of the slewing body relative to the deduced second position as the reference. In this regard, in execution of the same kinds of works a plurality of times, the slewing body may face different directions at respective starts of the works. Even in this case, the configuration enables comparison between the second slewing angles at respective timings of the works from starts of the works, and comparison between the profiles of the second slewing angles with respect to an elapsed time in the works.

In the embodiment, the reference calculation part 23 may obtain the slewing angle reference by excluding a first slewing angle of the slewing body being at rest to the base body (the lower traveling body 101 in the example in Fig. 2) from among the first slewing angles calculated by the first slewing angle calculation part 22 for the images respectively. This configuration in which the slewing angle reference is obtained by excluding the first slewing angle of the slewing body being at rest to the base body enables more accurate obtainment of the slewing angle reference than a configuration without such exclusion.

Fig. 9 is a graph showing first slewing angles in a time series and a slewing angle reference obtained on the basis of the first slewing angles, the first slewing angles including an angle at which the slewing body is at rest, as an example. Fig. 9 shows a horizontal axis indicating a time and a vertical axis indicating an angle. Fig. 10 is a graph showing a determination result as to whether the slewing body is determined as being at rest or not in connection with the case in Fig. 9. Fig. 10 shows a horizontal axis indicating a time and a vertical axis indicating the determination result. The numeral "1.0" indicates the determination result as the rest, and the numeral "0.0" indicates the determination result as no rest. Fig. 11 is a graph showing the first slewing angles in the time series and a slewing angle reference obtained by excluding a first slewing angle at which the slewing body is at rest in connection with the case in Fig. 9. Fig. 11 shows a horizontal axis indicating a time and a vertical axis indicating an angle.

For instance, when the slewing body is at rest because of a short break of an operator or another reason, the first slewing angles of the slewing body are kept substantially the same as illustrated in Fig. 9. Obtaining a slewing angle reference $\gamma_0$ on the basis of the first slewing angles of the slewing body in this state results in a failure at obtaining an appropriate slewing angle reference $\gamma_0$ due to the first slewing angles of the slewing body kept substantially the same. From this perspective, the reference calculation part 23 further calculates a variance in movement amounts based on a given number of images around a target time (target timing) for determination as to whether the slewing body is at rest, and determines that the slewing body is at rest at the target time when the calculated variance indicates a preset threshold (fourth threshold) or lower and determines that the slewing body is not at rest at the target time when the calculated variance exceeds the fourth threshold. The fourth threshold is, for example, appropriately set in advance from a plurality of samples. The given number of images around the target time include, for example, an image at the target time and five or ten images preceding or subsequent to the image in a time series. Besides, as described above, the reference calculation part 23 obtains the slewing angle reference $\gamma_0$ by excluding a first slewing angle of the slewing body being at rest to the base body from among the first slewing angles calculated by the first slewing angle calculation part 22 for the images respectively. In connection with the case in Fig. 9, Fig. 10 shows a determination result as to whether the slewing body is determined as being at rest or not, and Fig. 11 shows the slewing angle reference $\gamma_0$ obtained by excluding the first slewing angle of the slewing body being at rest. The slewing angle reference $\gamma_0$ in Fig. 11 shows modification from the slewing angle reference $\gamma_0$ in Fig. 9.

In the embodiment, the image capturing part 106 is located outside the slewing body, that is, attached to an outer part of the cab compartment 105 in the example in Fig. 2. However, the image capturing part 106 may be arranged inside the slewing body, that is, may be attached to, for example, an inner part of the cab compartment 105 in such a manner as to capture an image of the external environment.

In the embodiment, the working machine slewing angle measurement system D may further functionally include, in the storage part 6, an exclusion region storage section 61 that stores a predetermined exclusion region as denoted by a dashed line in Fig. 1. The first slewing angle calculation part 22 may calculate the first slewing angles of the slewing body for the images respectively on the basis of each image among the images without the exclusion region and on the basis of a preceding image adjacent to the image and without an exclusion region. This configuration enables a reduction in an information processing amount by excluding the exclusion region from each image among the images and an exclusion region from an image adjacent to the image in the calculation of the first slewing angles of the slewing body.

In each of the images in the time series, an image region showing the same subject at the same position does not contribute to calculation of a movement amount between the first and second feature points, and thus, the image region is set to the exclusion region. Examples of the subject in the exclusion region include a subject seen at the same position in each image captured by the image capturing part 106 even in slewing of the slewing body. In particular, as described above, in the case where the image capturing part 106 is attached to the inner part of the slewing body (the inner part of the cab compartment 105 in Fig. 2) in such a manner as to capture an image of the external environment, a frame or window frame of the slewing body, a manipulation lever, and a floor may be the subject seen at the same position in the image captured by the image capturing part 106 even in the slewing of the slewing body. Hence, the subject in the exclusion region includes at least one of the frame or window frame of the slewing body, the manipulation lever, and the floor. This configuration defining an image region showing the same subject at the same position as the exclusion region in each of the images enables exclusion of such a region showing a subject slewing in conjunction with slewing of the slewing body.

For instance, such an exclusion region is manually set and stored in the exclusion region storage section 61. For example, at an initial setting, the image acquisition part 1 acquires an image generated by the image capturing part 106, and the acquired image is output to the output part 4. For instance, the output part 4 is a display device to display, for example, an image SP in Fig. 12. Fig. 12 is an illustration for explaining a manual setting of such an exclusion region. The operator or user uses, for example, the input part 3, such as a mouse, to follow a contour of a region to be set as an exclusion region AR with a mouse cursor, and inputs the exclusion region. In the example in Fig. 12, three image regions of the first to third image regions AR1 to AR3 showing manipulation levers are input as three exclusion regions AR1 to AR3. The exclusion region storage section 61 stores the input exclusion regions AR. The initial setting is executed at the attachment of the image capturing part 106 to the working machine HS and the start of the working machine slewing angle measurement system D. Such an exclusion region AR may be set at a time of reattachment of the image capturing part 106 to the working machine HS or at a lapse of a predetermined time in the same manner as the initial setting.

Although each exclusion region AR is manually set in the description above, the working machine slewing angle measurement system D may automatically set the exclusion region AR at the initial setting. In this case, the control processor 2 in the working machine slewing angle measurement system D may further functionally include an exclusion region extraction part 25 that extracts an exclusion region on the basis of an image as denoted by the dashed line in Fig. 1, and the extracted exclusion region is stored in the exclusion region storage section 61.

Specifically, for instance, an image showing a subject (e.g., an image showing a manipulation lever) in the exclusion region is prepared as a template in advance and stored in the storage part 6. The image acquisition part 1 acquires an image generated by the image capturing part 106, the exclusion region extraction part 25 retrieves and extracts a region that is most similar to the template from the acquired image through so-called template matching, and the exclusion region storage section 61 stores the extracted region as the exclusion region.

Alternatively, for instance, so-called geometry pattern matching may be adopted in place of the template matching. The geometry pattern matching includes defining, for example, an edge as a geometry pattern, extracting edges from each of the template and the image, comparing the edges of the template with the edges of the image, and extracting a region having such an edge as to mostly agree with the associated edge of the template from the image as the exclusion region.

Alternatively, for instance, the image acquisition part 1 acquires two images PC(t1) and PC(t2) respectively generated at different times t1 and t2 in slewing of the slewing body. The exclusion region extraction part 25 extracts a feature point or third feature point from one of the two images PC(t1) and PC(t2) acquired by the image acquisition part 1, for example, from the image PC(t1), extracts a feature point or fourth feature point associated with the extracted third feature point from the other image PC(t1), compares a pixel value of the one image PC(t1) with a pixel value of the other image PC(t2) about each pixel in overlapping areas of the images PC(t1) and PC(t2) that are superimposed with the associated third and fourth feature points coinciding each other, and extracts pixels having the same pixel values as pixels in the exclusion region, and the exclusion region storage section 61 stores a region including the extracted pixels as the exclusion region. When the two images PC(t1) and PC(t2) show the same subject, the pixel values are the same. For this reason, the pixel values are compared. The same way as the way employed by the first slewing angle calculation part 22, e.g., the "A-KAZE" algorism or the Brute-Force Matcher, is adopted for the extraction and the associated point retrieval of the feature points. The filtering processing employed by the first slewing angle calculation part 22 may be executed after the associated point retrieval if necessary. A plurality of third feature points and a plurality of fourth feature points are preferably extracted to superimpose the two images PC(t1) and PC(t2) with a high positioning accuracy. Besides, at least one of the two images PC(t1) and PC(t2) is subjected to the Affine transformation if necessary. The region including extracted pixels may be a region including pixels being continuous to one another among the extracted pixels. One or more regions in this form may be shown. An exclusion region may have a single color or a plurality of colors. Accordingly, the pixel values of the pixels being continuous to one another may be the same or differ from each other. It is noted that each pixel at the distance of a specific number of pixels (e.g., one pixel or two pixels) may constitute one region in a group.

Fig. 13 is a flowchart showing an operation of the working machine slewing angle measurement system D concerning an automatic setting of the exclusion region.

In the automatic setting of the exclusion region, in Fig. 13, first, it is determined whether slewing is started (step S21). When the slewing is not started (NO) as a result of the determination, the process is returned to step S21. In contrast, when it is determined that the slewing is started (YES), the image capturing part 106 generates an image, and the image is stored or kept (step S22), and it is determined whether the slewing is finished (step S23). When the slewing is not finished (NO) as a result of the determination, the process is returned to step S22. In contrast, when it is determined that the slewing is started (YES), step S24 is subsequently executed. For instance, each of the start and the finish of the slewing is made by an acceleration sensor attached to the slewing body to detect an acceleration rate. The start of the slewing is determined on detection of the acceleration rate by the acceleration sensor, and the finish of the slewing is determined on continuous non-detection of acceleration rates for a preset time period. The start of the slewing may be detected in accordance with an increase in a detection value of a manipulation amount of the manipulation lever or an increase in an angular velocity by a gyro sensor. The finish of the slewing may be detected in accordance with a decrease in the detection value of the manipulation amount of the manipulation lever or a reduction in the angular velocity by the gyro sensor. Further, the automatic setting of the exclusion region requires the two images PC(t1) and PC(t2). Hence, the finish of the slewing may be determined even during the slewing at a timing when the two images PC(t1) and PC(t2) are generated and stored.

In step S24, the image capturing part 106 outputs the images PC(t1) and PC(t2) generated at different timings t1 and t2 respectively during the slewing of the slewing body, the image acquisition part 1 acquires the two images PC(t1) and PC(t2), and the storage part 6 stores the images. Subsequently, the exclusion region extraction part 25 extracts an exclusion region AR on the basis of the two images PC(t1) and PC(t2) acquired by the image acquisition part 1 (step S25), and sets the extracted exclusion region AR to be stored in the exclusion region storage section 61 (step S26). Finally, the process is finished.

In the embodiment, the working machine slewing angle measurement system D is integrated with the computer. However, the working machine slewing angle measurement system D may be in the form of a system including the working machine HS, a mobile terminal, and a management server communicably connected to one another via a communication network in all the embodiments and modifications described above. In this configuration, the working machine HS sends a video image generated by the image capturing part 106 to the management server via the communication network, and the management server stores and manages the video image. The working machine HS may send the video image generated by the image capturing part 106 to the mobile terminal via the communication network, and the mobile terminal may be configured to store and display the video image. The mobile terminal is configured to serve as the input part 3 and the output part 4 in relation to the management server. The management server is configured to serve as the image acquisition part 1, the control processor 2, and the storage part 6.

Various aspects of technologies are disclosed in this specification as described above. Main technologies among them will be summarized below.

A working machine slewing angle measurement system according to one aspect includes: an image acquisition part that acquires a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body; a first slewing angle calculation part that calculates first slewing angles of the slewing body, with reference to a position of the slewing body relative to the base body shown in a foremost image among the images, for the images respectively on the basis of each image among the images and on the basis of a preceding image adjacent to the image in the time series; a reference calculation part that obtains a predetermined (first) position in the external environment to be a slewing angle reference on the basis of the first slewing angles calculated by the first slewing angle calculation part for the images respectively; and a second slewing angle calculation part that calculates, on the basis of the first slewing angles calculated by the first slewing angle calculation part for the images respectively and on the basis of the slewing angle reference obtained by the reference calculation part, second slewing angles of the slewing body with respect to the slewing angle reference for the images respectively. Preferably, in the working machine slewing angle measurement system, the base body is a traveling body configured to travel, the working mechanism includes: a boom connected to the slewing body in a slewing manner in the up-down direction; an arm connected to the boom in a slewing manner in the up-down direction; and an openable and closable crusher connected to the arm and having a pair of crushing blades, and the working machine is a demolishing machine. Preferably, the image capturing part is attached to an outer part of the slewing body in the working machine slewing angle measurement system. Preferably, the image capturing part is attached to an inner part of the slewing body in such a manner as to capture an image of the external environment in the working machine slewing angle measurement system.

The working machine slewing angle measurement system obtains a predetermined position in the external environment to be a slewing angle reference, and calculates second slewing angles with respect to the slewing angle reference. This leads to establishment of such a reference in the external environment in a direction in which the slewing body in a work faces, resulting in achievement of calculation of a slewing angle of the slewing body with reference to the direction in which the slewing body mainly faces in the work without relying on a specific object or marker as the reference.

In the aspect, in the working machine slewing angle measurement system, the predetermined work includes slewing the slewing body leftward and rightward relative to a predetermined second position in the external environment, and the predetermined (first) position in the external environment is deduced to serve as the predetermined second position in the external environment.

The working machine slewing angle measurement system enables, in a work executed by slewing the slewing bod leftward and rightward relative to a predetermined second position in the external environment, calculation of the second slewing angles of the slewing body relative to the deduced second position as the reference. In this regard, in execution of the same kinds of works a plurality of times, the slewing body may face different directions at respective starts of the works. Even in this case, the configuration enables comparison between the second slewing angles at respective timings of the works from starts of the works, and comparison between the profiles of the second slewing angles with respect to an elapsed time in the works.

In the aspect, in the working machine slewing angle measurement system, the reference calculation part obtains the slewing angle reference by excluding a first slewing angle of the slewing body being at rest to the base body from among the first slewing angles calculated by the first slewing angle calculation part for the images respectively.

The working machine slewing angle measurement system obtains the slewing angle reference by excluding a first slewing angle of the slewing body being at rest to the base body. This configuration enables more accurate obtainment of the slewing angle reference than a configuration without such exclusion.

In the aspect, in the working machine slewing angle measurement system, the reference calculation part obtains the slewing angle reference by employing a predetermined linear approximation way.

In this manner, the working machine slewing angle measurement system is achieved to obtain the slewing angle reference by employing the predetermined linear approximation way.

In the aspect, the working machine slewing angle measurement system further includes an exclusion region storage section that stores a predetermined exclusion region. The first slewing angle calculation part calculates the first slewing angles of the slewing body for the images respectively on the basis of each image among the images without the exclusion region and on the basis of a preceding image adjacent to the image and without an exclusion region.

The working machine slewing angle measurement system enables a reduction in an information processing amount by excluding the exclusion region from each image among the images and an exclusion region from an image adjacent to the image in the calculation of the first slewing angles of the slewing body.

In the aspect, in the working machine slewing angle measurement system, the exclusion region indicates an image region showing a same subject at a same position in each of the images. In the working machine slewing angle measurement system, the subject is preferably seen at the same position in each image captured by the image capturing part even in slewing of the slewing body. In the working machine slewing angle measurement system, in the case where the image capturing part is attached to an inner part of the slewing body in such a manner as to capture an image of the external environment, the subject preferably includes at least one of a frame or window frame of the slewing body, a manipulation lever, and a floor.

The working machine slewing angle measurement system having this configuration defining an image region showing the same subject at the same position as the exclusion region in each of the images enables exclusion of such a region showing a subject slewing in conjunction with slewing of the slewing body.

A working machine slewing angle measurement method according to another aspect includes: an image acquisition step of acquiring a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body; a first slewing angle calculation step of calculating first slewing angles of the slewing body, with reference to a position of the slewing body relative to the base body shown in a foremost image among the images, for the images respectively on the basis of each image among the images and on the basis of a preceding image adjacent to the image in the time series; a reference calculation step of obtaining a predetermined position in the external environment to be a slewing angle reference on the basis of the first slewing angles calculated in the first slewing angle calculation step for the images respectively; and a second slewing angle calculation step of calculating, on the basis of the first slewing angles calculated in the first slewing angle calculation step for the images respectively and on the basis of the slewing angle reference calculated in the reference calculation step, second slewing angles of the slewing body with respect to the slewing angle reference for the images respectively.

A recording medium or storage medium according to another aspect that records or stores a working machine slewing angle measurement program includes making the working machine slewing angle measurement program cause a computer to serve as: an image acquisition part that acquires a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body; a first slewing angle calculation part that calculates first slewing angles of the slewing body, with reference to a position of the slewing body relative to the base body shown in a foremost image among the images, for the images respectively on the basis of each image among the images and on the basis of a preceding image adjacent to the image in the time series; a reference calculation part that obtains a predetermined position in the external environment to be a slewing angle reference on the basis of the first slewing angles calculated by the first slewing angle calculation part for the images respectively; and a second slewing angle calculation part that calculates, on the basis of the first slewing angles calculated by the first slewing angle calculation part for the images respectively and on the basis of the slewing angle reference obtained by the reference calculation part, second slewing angles of the slewing body with respect to the slewing angle reference for the images respectively.

The working machine slewing angle measurement method and the working machine slewing angle measurement program are intended for obtaining a predetermined position in an external environment to be a slewing angle reference and calculating the second slewing angles of the slewing body with respect to the slewing angle reference. This leads to establishment of such a reference in the external environment in a direction in which the slewing body in a work faces, resulting in achievement of calculation of a slewing angle of the slewing body with reference to the direction in which the slewing body mainly faces in the work without relying on a specific object or marker as the reference. The present invention can provide a recording medium that records the working machine slewing angle measurement program.

This application is based on Japanese Patent Application No. 2022-105343 filed in Japan Patent Office on June 30, 2022, and includes contents thereof.

Although the present invention has been fully described by way of the embodiments and examples with reference to the above-described specific examples, it is to be understood that various changes and/or modifications to the embodiments and examples will be apparent to those skilled in the art. Therefore, unless otherwise such changes and modifications to be made by those skilled in the art depart from the scope of the present invention hereinafter defined, they should be construed as being included therein.

## Industrial Applicability

The present invention provides a working machine slewing angle measurement system, a working machine slewing angle measurement method, and a recording medium that records a working machine slewing angle measurement program, to each calculate a slewing angle of a slewing body of a working machine.

## Claims

**1.** A working machine slewing angle measurement system, comprising:

an image acquisition part that acquires a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body;

a first slewing angle calculation part that calculates first slewing angles of the slewing body, with reference to a position of the slewing body relative to the base body shown in a foremost image among the images, for the images respectively on the basis of each image among the images and on the basis of a preceding image adjacent to the image in the time series;

a reference calculation part that obtains a predetermined position in the external environment to be a slewing angle reference on the basis of the first slewing angles calculated by the first slewing angle calculation part for the images respectively; and

a second slewing angle calculation part that calculates, on the basis of the first slewing angles calculated by the first slewing angle calculation part for the images respectively and on the basis of the slewing angle reference obtained by the reference calculation part, second slewing angles of the slewing body with respect to the slewing angle reference for the images respectively.

**2.** The working machine slewing angle measurement system according to claim 1, wherein the predetermined work includes slewing the slewing body leftward and rightward relative to a predetermined second position in the external environment, and

the predetermined position in the external environment is deduced to serve as the predetermined second position in the external environment.

**3.** The working machine slewing angle measurement system according to claim 1, wherein the reference calculation part obtains the slewing angle reference by excluding a first slewing angle of the slewing body being at rest to the base body from among the first slewing angles calculated by the first slewing angle calculation part for the images respectively.

**4.** The working machine slewing angle measurement system according to any one of claims 1 to 3, wherein the reference calculation part obtains the slewing angle reference by employing a predetermined linear approximation way.

**5.** The working machine slewing angle measurement system according to claim 1, further comprising an exclusion region storage section that stores a predetermined exclusion region, wherein

the first slewing angle calculation part calculates the first slewing angles of the slewing body for the images respectively on the basis of each image among the images without the exclusion region and on the basis of a preceding image adjacent to the image and without an exclusion region.

**6.** The working machine slewing angle measurement system according to claim 5, wherein the exclusion region indicates an image region showing a same subject at a same position in each of the images.

**7.** A working machine slewing angle measurement method, comprising:

an image acquisition step of acquiring a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body;

a first slewing angle calculation step of calculating first slewing angles of the slewing body, with reference to a position of the slewing body relative to the base body shown in a foremost image among the images, for the images respectively on the basis of each image among the images and on the basis of a preceding image adjacent to the image in the time series;

a reference calculation step of obtaining a predetermined position in the external environment to be a slewing angle reference on the basis of the first slewing angles calculated in the first slewing angle calculation step for the images respectively; and

a second slewing angle calculation step of calculating, on the basis of the first slewing angles calculated in the first slewing angle calculation step for the images respectively and on the basis of the slewing angle reference calculated in the reference calculation step, second slewing angles of the slewing body with respect to the slewing angle reference for the images respectively.

**8.** A recording medium that records a working machine slewing angle measurement program, comprising:

making the working machine slewing angle measurement program cause a computer to serve as:

an image acquisition part that acquires a plurality of images generated in a time series by an image capturing part provided to a working machine including: a base body; a slewing body connected to the base body in a slewing manner; and a working mechanism mounted on the slewing body to execute a predetermined work, the image capturing part being movable in conjunction with slewing of the slewing body, each of the images showing an external environment in a view from the slewing body;

a first slewing angle calculation part that calculates first slewing angles of the slewing body, with reference to a position of the slewing body relative to the base body shown in a foremost image among the images, for the images respectively on the basis of each image among the images and on the basis of a preceding image adjacent to the image in the time series;

a reference calculation part that obtains a predetermined position in the external environment to be a slewing angle reference on the basis of the first slewing angles calculated by the first slewing angle calculation part for the images respectively; and

a second slewing angle calculation part that calculates, on the basis of the first slewing angles calculated by the first slewing angle calculation part for the images respectively and on the basis of the slewing angle reference obtained by the reference calculation part, second slewing angles of the slewing body with respect to the slewing angle reference for the images respectively.

FIG.1

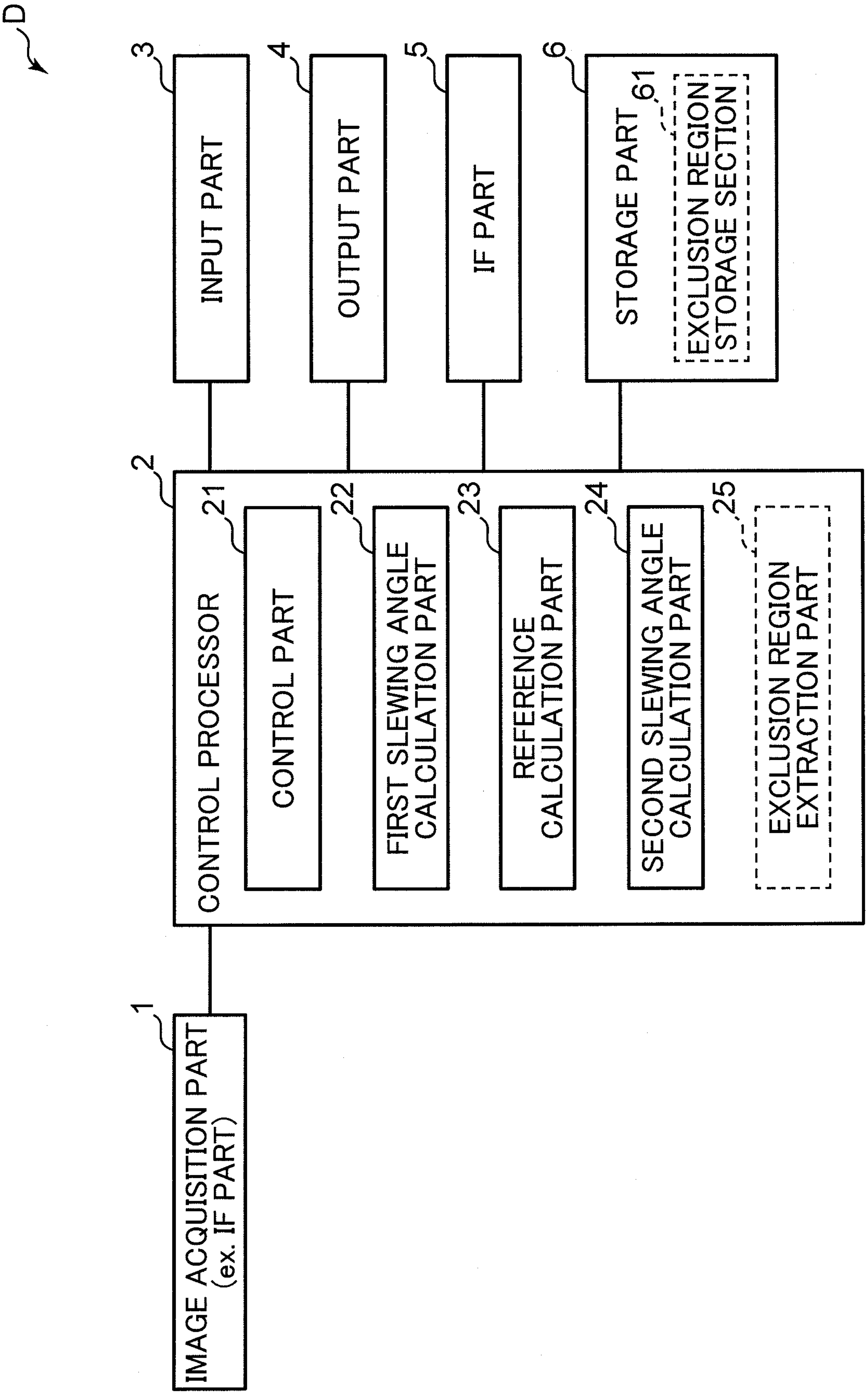
D
1
IMAGE ACQUISITION PART (ex. IF PART)
2
CONTROL PROCESSOR
21
CONTROL PART
22
FIRST SLEWING ANGLE CALCULATION PART
23
REFERENCE CALCULATION PART
24
SECOND SLEWING ANGLE CALCULATION PART
25
EXCLUSION REGION EXTRACTION PART
3
INPUT PART
4
OUTPUT PART
5
IF PART
6
STORAGE PART
61
EXCLUSION REGION STORAGE SECTION

FIG.2

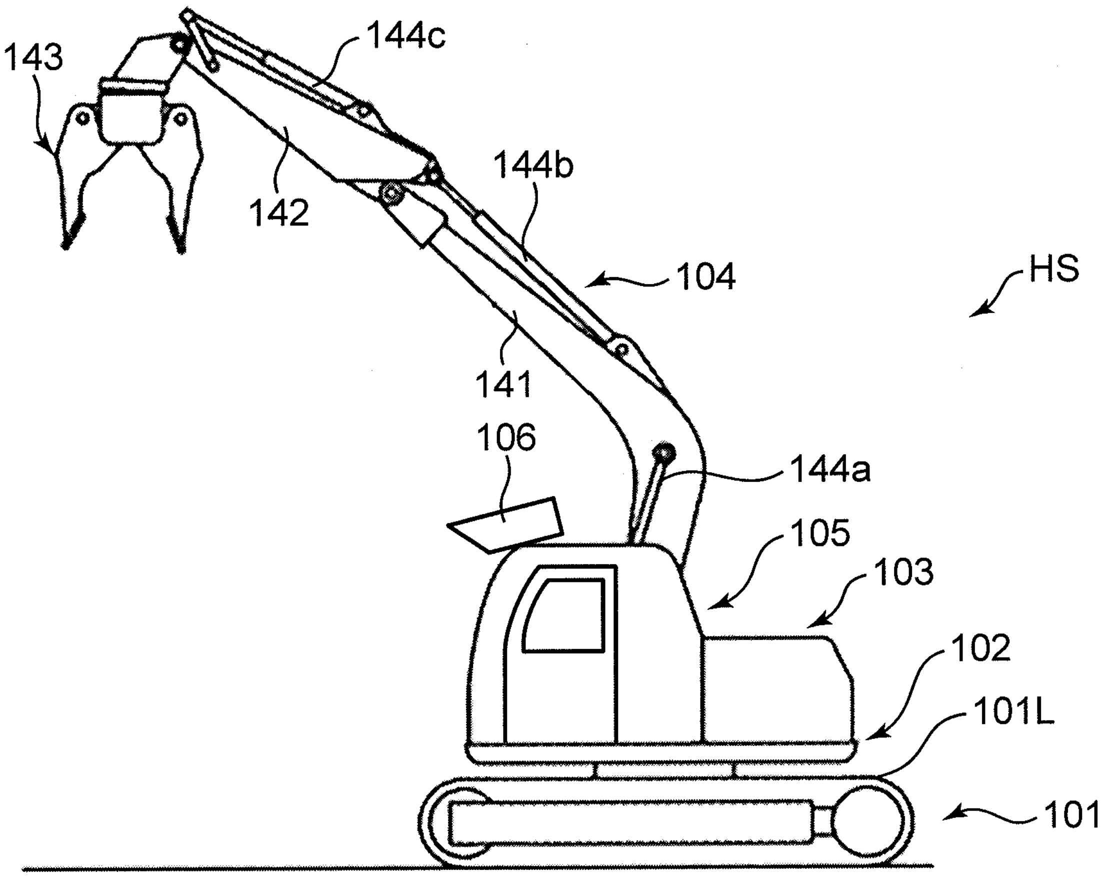

FIG.3

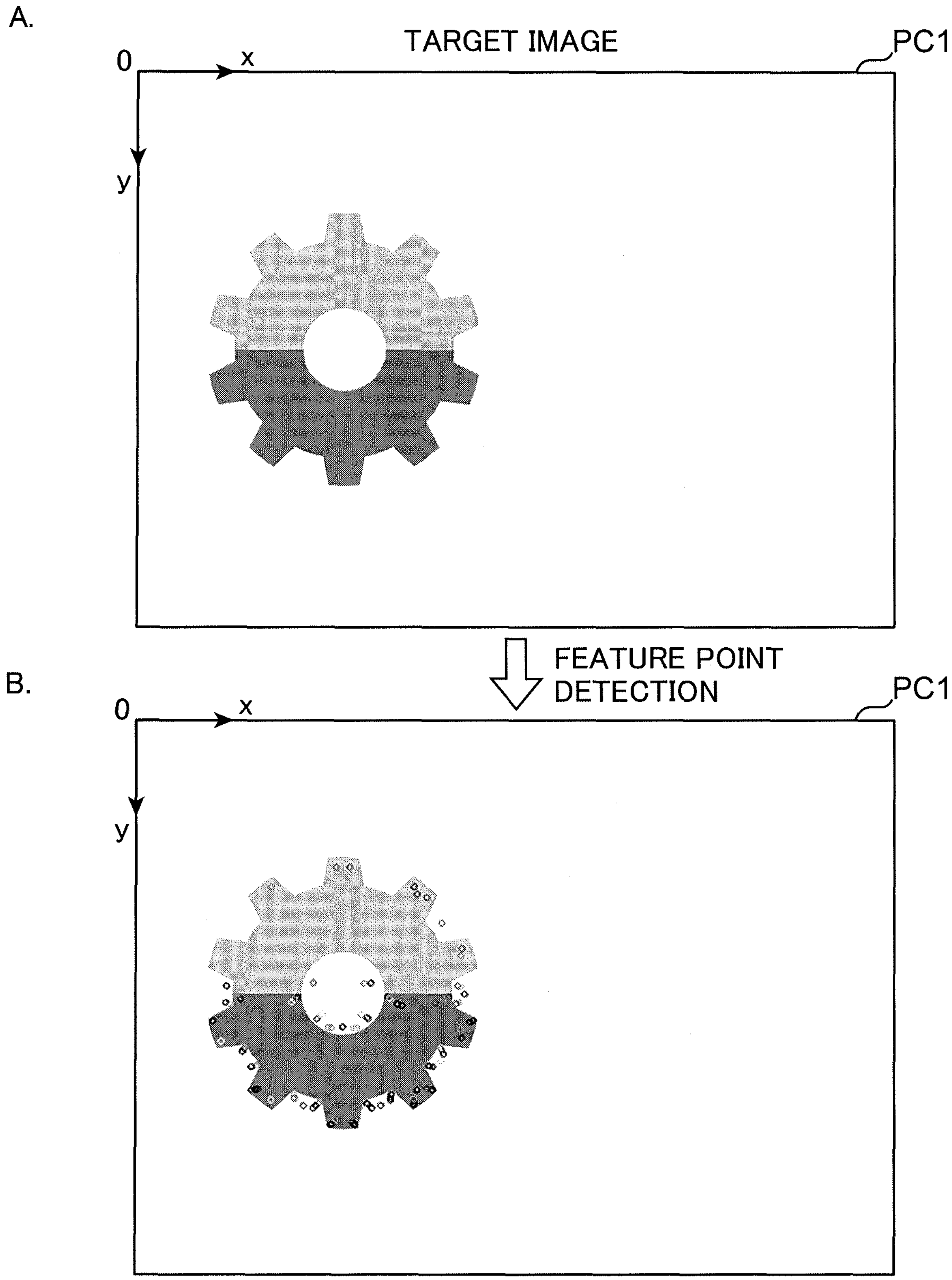

FIG.4A

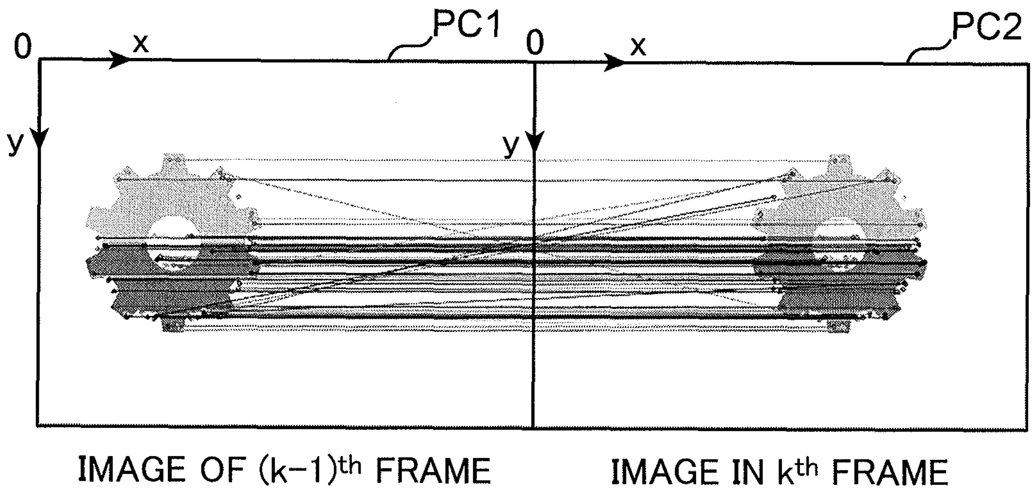
0
x
PC1
0
x
PC2
y
y
IMAGE OF (k-1)th FRAME
IMAGE IN kth FRAME

FIG.4B

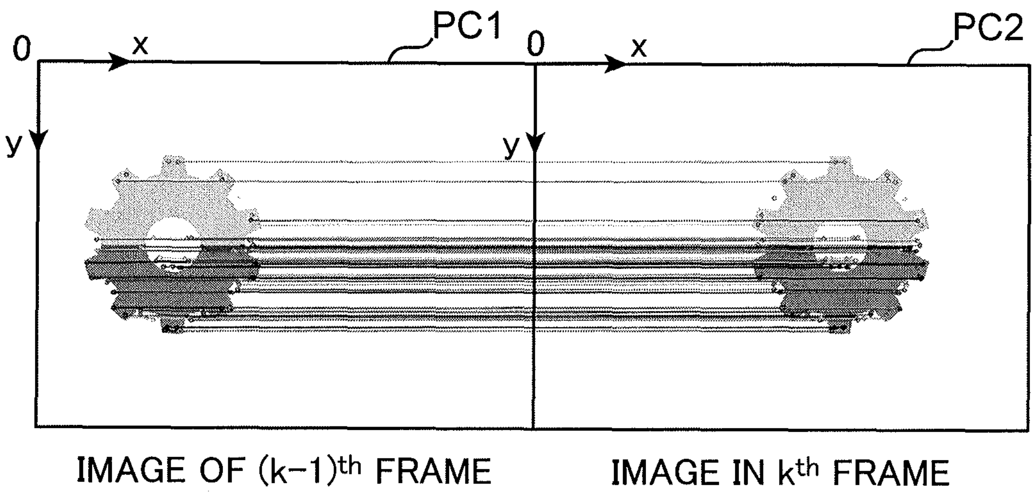
0
x
PC1
0
x
PC2
y
y
IMAGE OF (k-1)th FRAME
IMAGE IN kth FRAME

FIG.5

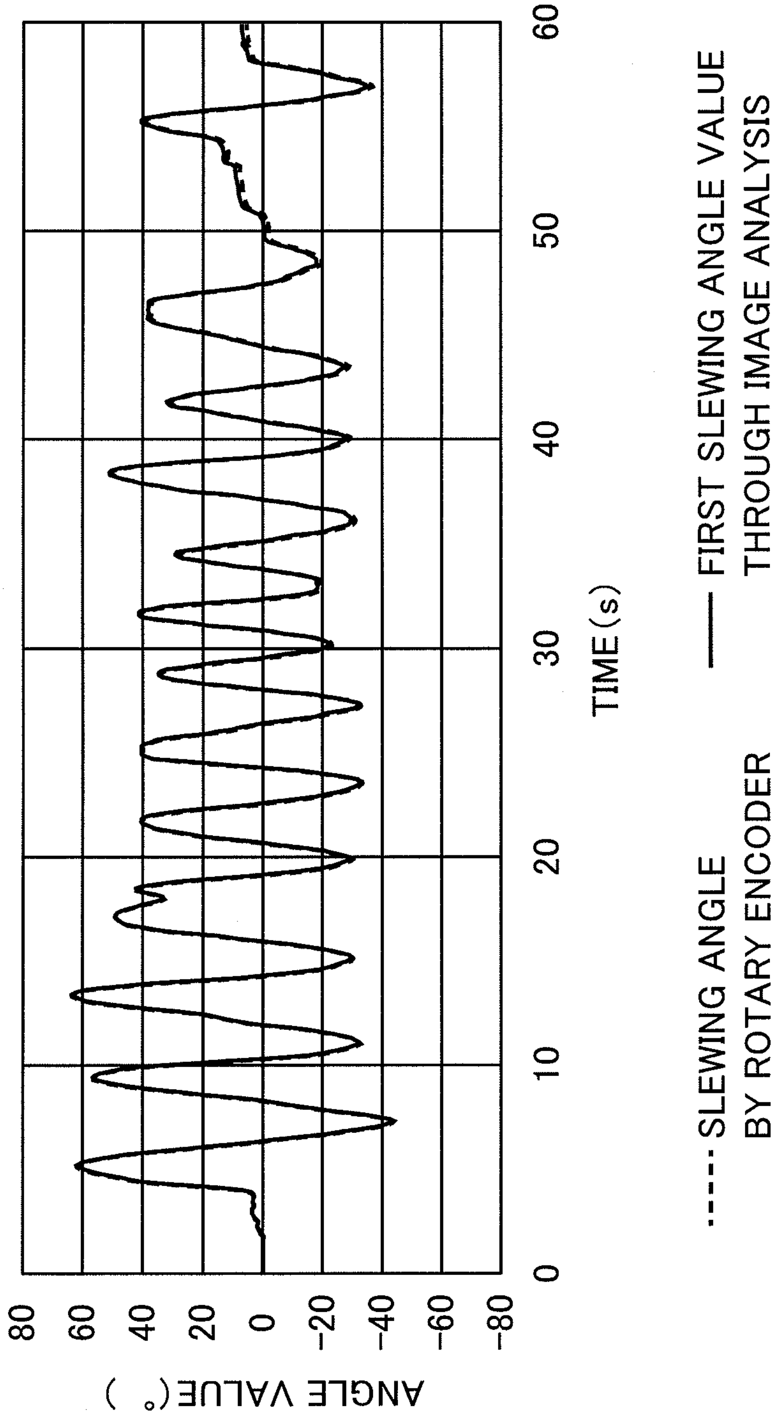
ANGLE VALUE (° )
80
60
40
20
0
-20
-40
-60
-80
0
10
20
30
40
50
60
TIME (s)
SLEWING ANGLE
BY ROTARY ENCODER
FIRST SLEWING ANGLE VALUE
THROUGH IMAGE ANALYSIS

FIG.6

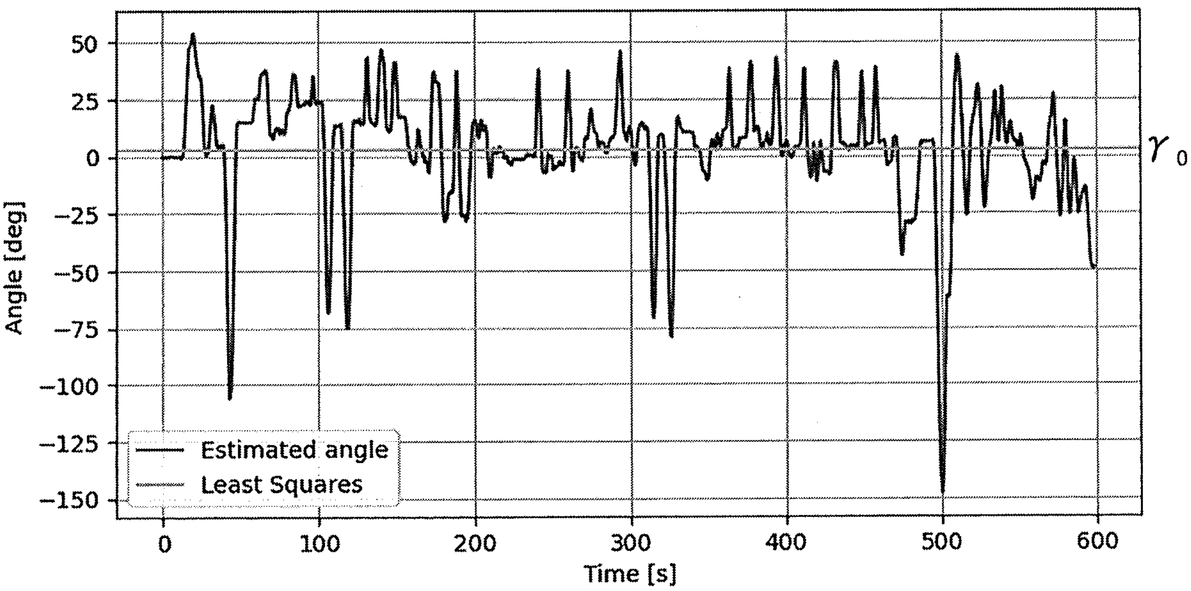

50
25
0
−25
−50
−75
−100
−125
−150
Angle [deg]
0
100
200
300
400
500
600
Time [s]
Estimated angle
Least Squares
$\gamma_0$

FIG.7A

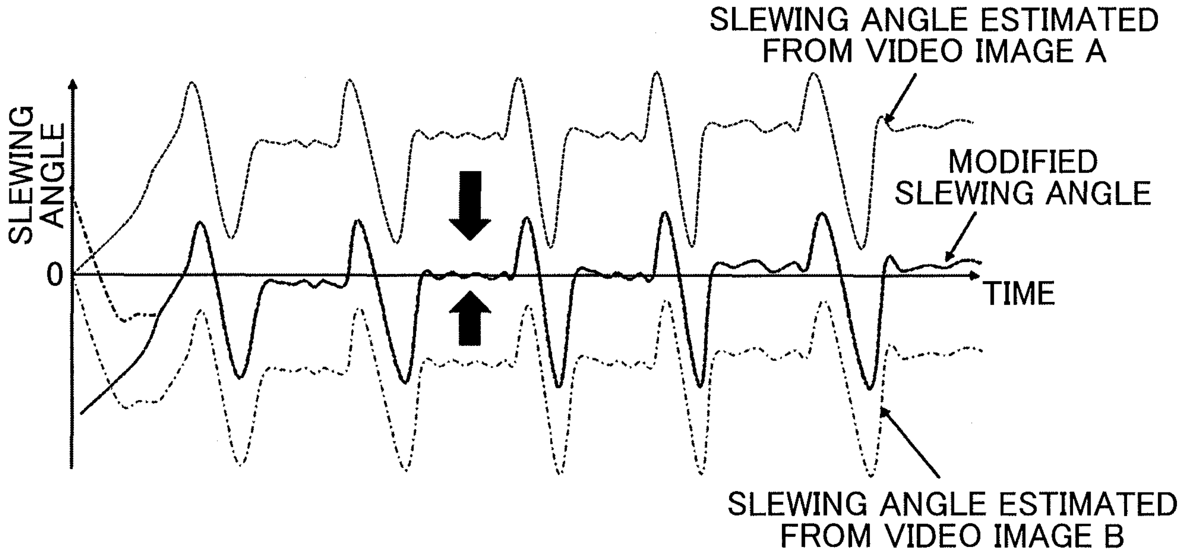
SLEWING ANGLE ESTIMATED FROM VIDEO IMAGE A
SLEWING ANGLE
0
MODIFIED SLEWING ANGLE
TIME
SLEWING ANGLE ESTIMATED FROM VIDEO IMAGE B

FIG.7B

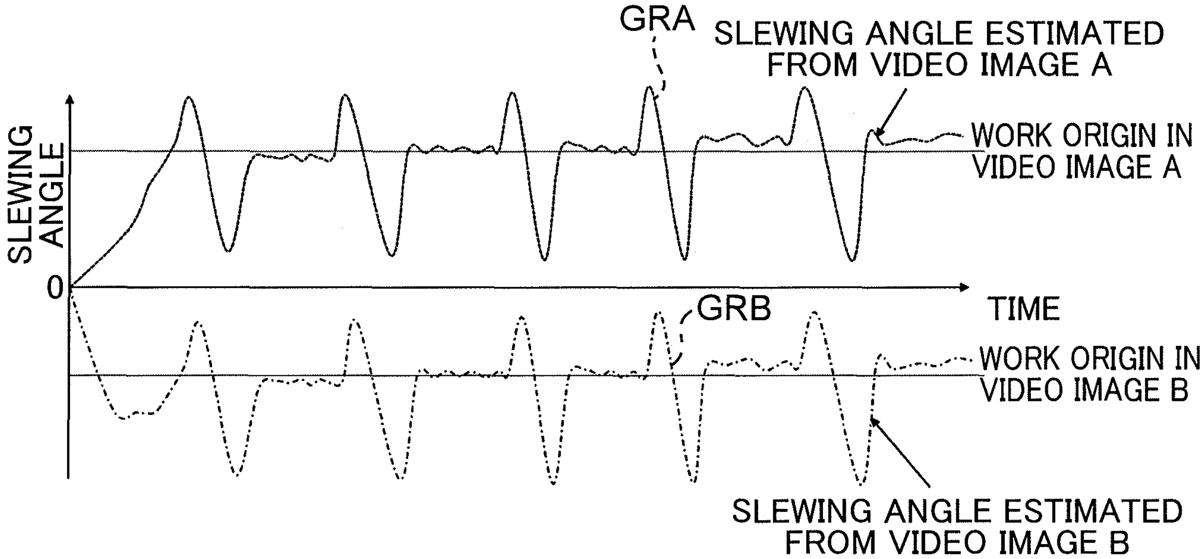
GRA
SLEWING ANGLE ESTIMATED FROM VIDEO IMAGE A
SLEWING ANGLE
WORK ORIGIN IN VIDEO IMAGE A
0
GRB
TIME
WORK ORIGIN IN VIDEO IMAGE B
SLEWING ANGLE ESTIMATED FROM VIDEO IMAGE B

FIG.8

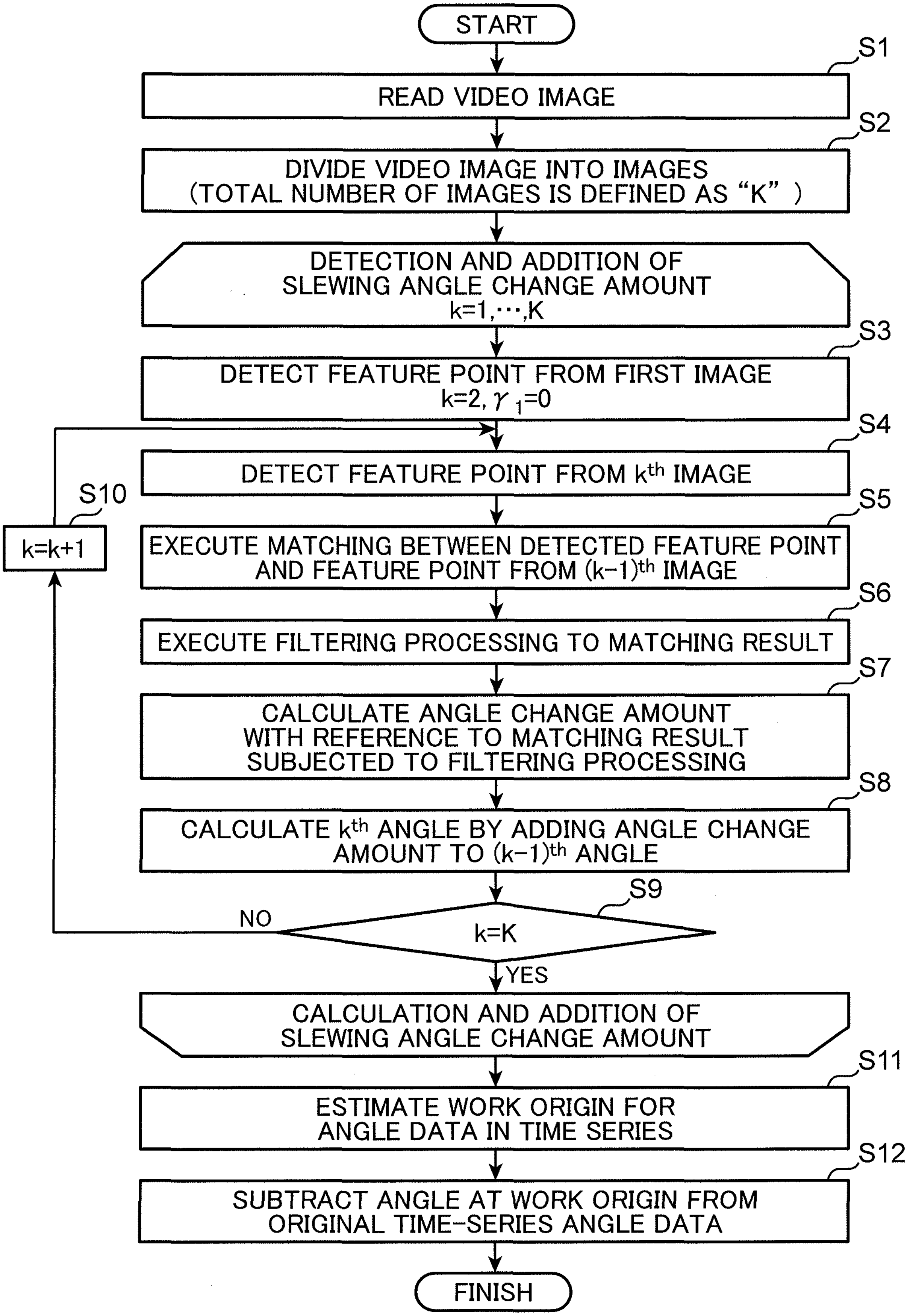
START
S1
READ VIDEO IMAGE
S2
DIVIDE VIDEO IMAGE INTO IMAGES (TOTAL NUMBER OF IMAGES IS DEFINED AS "K")
DETECTION AND ADDITION OF SLEWING ANGLE CHANGE AMOUNT k=1,…,K
S3
DETECT FEATURE POINT FROM FIRST IMAGE k=2, γ1=0
S4
DETECT FEATURE POINT FROM kth IMAGE
S5
EXECUTE MATCHING BETWEEN DETECTED FEATURE POINT AND FEATURE POINT FROM (k-1)th IMAGE
S6
EXECUTE FILTERING PROCESSING TO MATCHING RESULT
S7
CALCULATE ANGLE CHANGE AMOUNT WITH REFERENCE TO MATCHING RESULT SUBJECTED TO FILTERING PROCESSING
S8
CALCULATE kth ANGLE BY ADDING ANGLE CHANGE AMOUNT TO (k-1)th ANGLE
S9
k=K
NO
YES
S10
k=k+1
CALCULATION AND ADDITION OF SLEWING ANGLE CHANGE AMOUNT
S11
ESTIMATE WORK ORIGIN FOR ANGLE DATA IN TIME SERIES
S12
SUBTRACT ANGLE AT WORK ORIGIN FROM ORIGINAL TIME-SERIES ANGLE DATA
FINISH

FIG.9

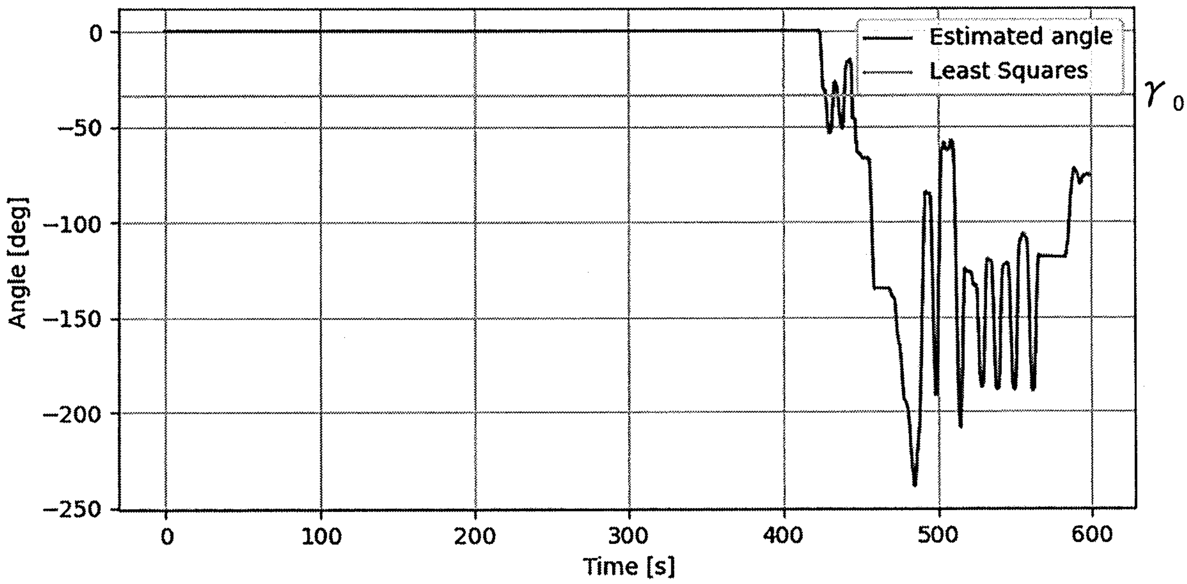
Estimated angle
Least Squares
$\gamma_0$
Angle [deg]
0
−50
−100
−150
−200
−250
0
100
200
300
400
500
600
Time [s]

FIG.10

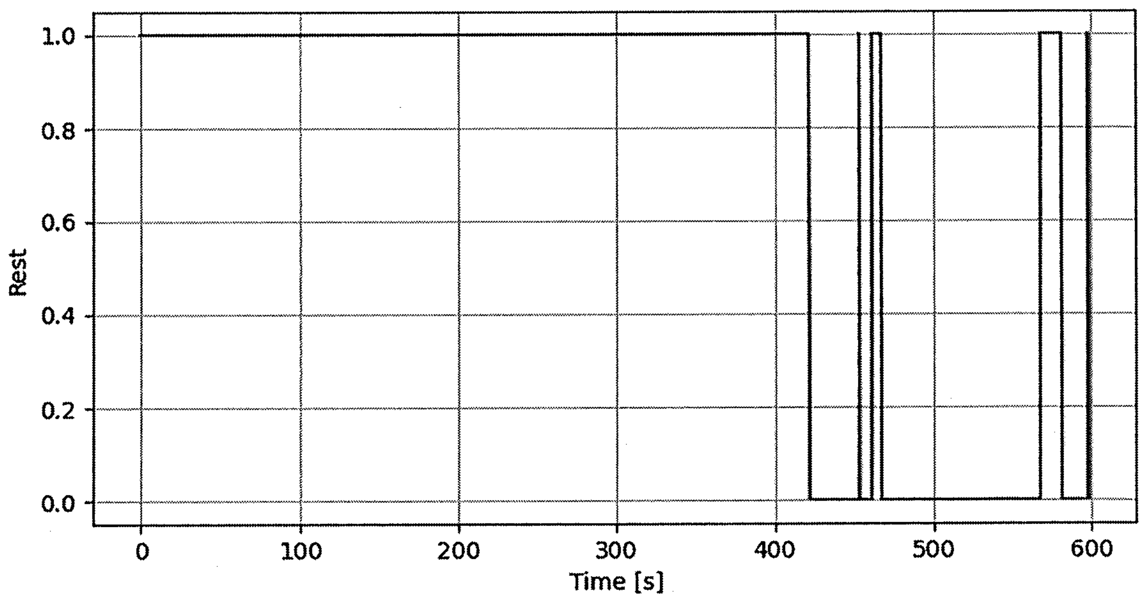
Rest
1.0
0.8
0.6
0.4
0.2
0.0
0
100
200
300
400
500
600
Time [s]

FIG.11

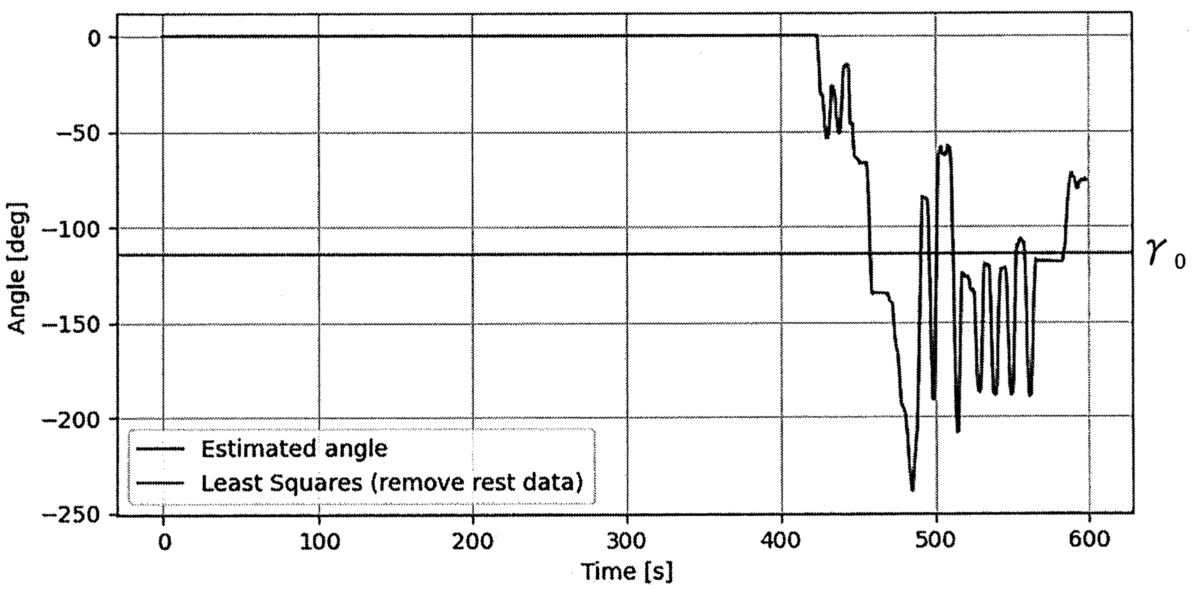
0
−50
−100
−150
−200
−250
Angle [deg]
0
100
200
300
400
500
600
Time [s]
Estimated angle
Least Squares (remove rest data)
$\gamma_0$

FIG.12

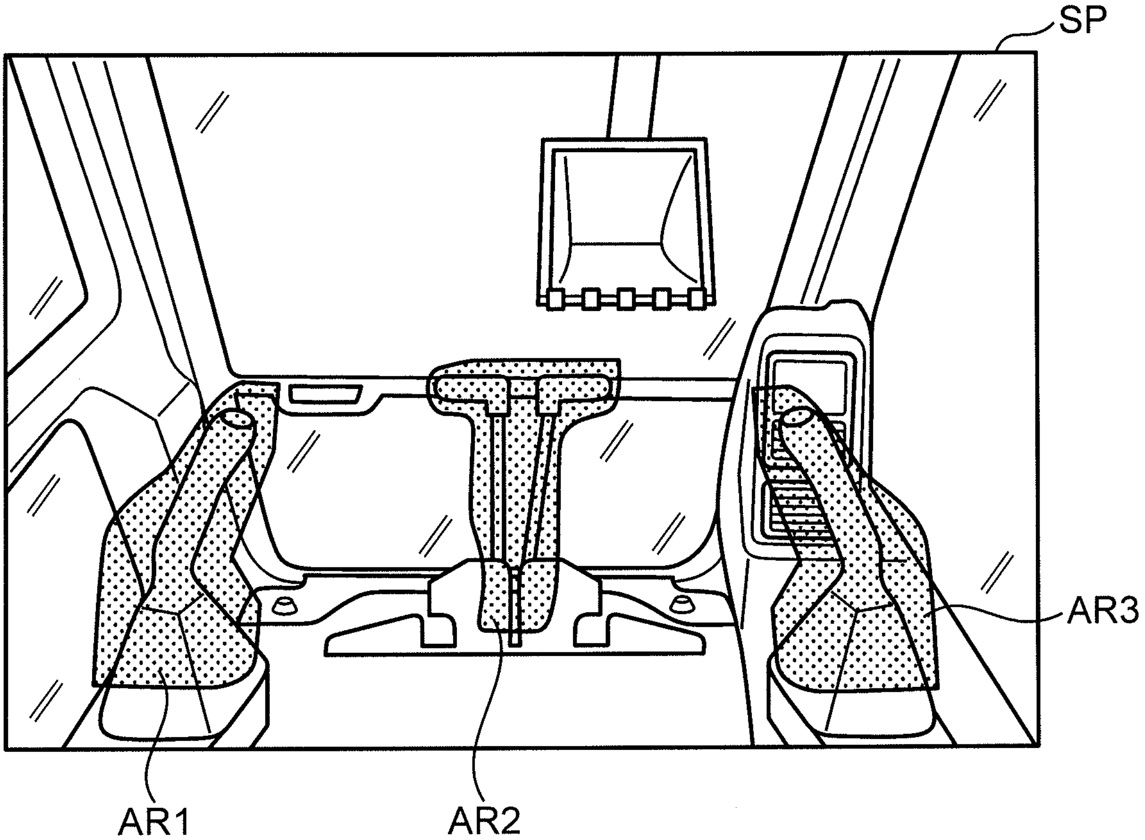

FIG.13

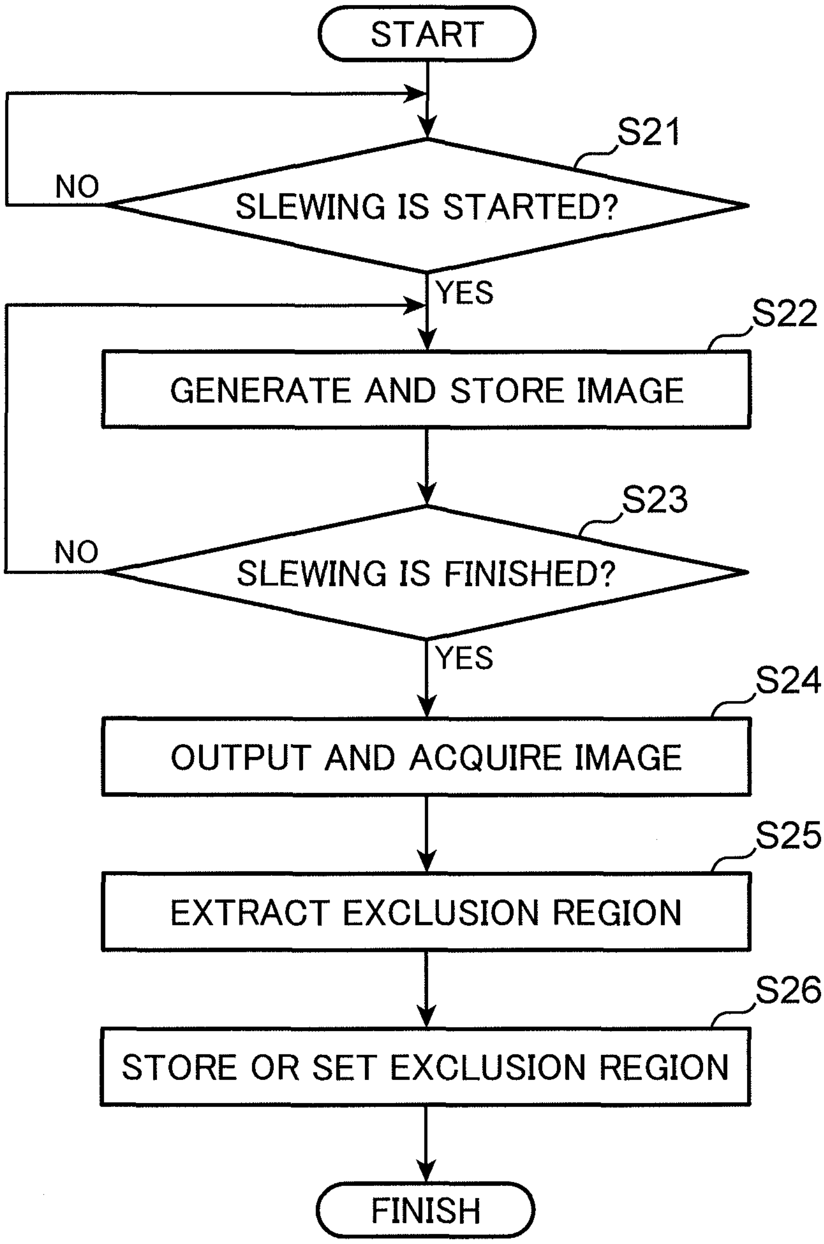
START
S21
NO
SLEWING IS STARTED?
YES
S22
GENERATE AND STORE IMAGE
S23
NO
SLEWING IS FINISHED?
YES
S24
OUTPUT AND ACQUIRE IMAGE
S25
EXTRACT EXCLUSION REGION
S26
STORE OR SET EXCLUSION REGION
FINISH

**INTERNATIONAL SEARCH REPORT**

International application No.
**PCT/JP2023/022568**

**A. CLASSIFICATION OF SUBJECT MATTER**

***E02F 9/26***(2006.01)i; ***G06T 7/70***(2017.01)i
FI: E02F9/26 B; G06T7/70 Z

According to International Patent Classification (IPC) or to both national classification and IPC

**B. FIELDS SEARCHED**

Minimum documentation searched (classification system followed by classification symbols)

E02F9/26; G06T7/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/196895 A1 (SUMITOMO (S.H.I.) CONSTRUCTION MACHINERY CO., LTD.) 01 October 2020 (2020-10-01)<br>entire text, all drawings | 1-8 |
| A | JP 2015-101470 A (OHBAYASHI CORP.) 04 June 2015 (2015-06-04)<br>entire text, all drawings | 1-8 |
| A | JP 2007-244296 A (YANMAR CO., LTD.) 27 September 2007 (2007-09-27)<br>entire text, all drawings | 1-8 |
| A | JP 2019-190163 A (KOBELCO CONSTRUCTION MACHINERY CO., LTD.) 31 October 2019 (2019-10-31)<br>entire text, all drawings | 1-8 |
| A | JP 2017-58272 A (KYB CORP.) 23 March 2017 (2017-03-23)<br>entire text, all drawings | 1-8 |
| A | JP 2012-107395 A (SUMITOMO (S.H.I.) CONSTRUCTION MACHINERY CO., LTD.) 07 June 2012 (2012-06-07)<br>entire text, all drawings | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/022568**

| Patent document cited in search report | Publication date (day/month/year) | Patent family member(s) | Publication date (day/month/year) |
|---|---|---|---|
| WO 2020/196895 A1 | 01 October 2020 | US 2022/0002970 A1<br>entire text, all drawings<br>EP 3951078 A1<br>KR 10-2021-0141950 A<br>CN 113661295 A | |
| JP 2015-101470 A | 04 June 2015 | (Family: none) | |
| JP 2007-244296 A | 27 September 2007 | (Family: none) | |
| JP 2019-190163 A | 31 October 2019 | US 2021/0180291 A1<br>entire text, all drawings<br>WO 2019/208060 A1<br>EP 3767044 A1<br>CN 111954740 A | |
| JP 2017-58272 A | 23 March 2017 | (Family: none) | |
| JP 2012-107395 A | 07 June 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017058272 A
- JP 2022105343 A